(19) Europäisches Patentamt

European Patent Office

Office européen des brevets

(11) EP 0 760 567 A2

(12) EUROPÄISCHE PATENTANMELDUNG

(43) Veröffentlichungstag:
05.03.1997 Patentblatt 1997/10

(51) Int. Cl.⁶: H04L 27/36

(21) Anmeldenummer: 96113648.8

(22) Anmeldetag: 26.08.1996

(84) Benannte Vertragsstaaten:
AT BE CH DE DK ES FI FR GB IT LI NL

(30) Priorität: 30.08.1995 DE 19531997

(71) Anmelder: SIEMENS AKTIENGESELLSCHAFT
80333 München (DE)

(72) Erfinder:
• Borst, Karlheinz, Dipl.-Ing.
81377 München (DE)
• Hoffmann, Stefan, Dipl.-Ing.
85354 Freising (DE)
• Lehmann, Uwe, Dipl.-Ing.
85221 Dachau (DE)

(54) **Digitaler QAM-modulator**

(57) Übliche QAM-Modulatoren enthalten zwei Mischern, in denen je ein Datensignal mit einem von 2 zueinander orthogonalen Trägern multipliziert wird; anschließend werden die erzeugten Modulationsprodukte durch Addition zu einem QAM-Signal zusammengefaßt. Bei höherstufigen Modulationsverfahren(64- und 256-QAM) werden an die Signalverarbeitung sehr hohe Anforderungen hinsichtlich Trägerphase, Pegelunterschied der Basisbandkanäle und Linearität gestellt, die nur durch aufwendigen Prüffeldabgleich und Auswahl geeigneter Bauteile erfüllt werden. Erfindungsgemäß wird ein voll in digitaler Technik aufgebauter QAM-Modulator vorgeschlagen, der nach eingangsseitiger digitaler Filterung der Basisbandsignale einen Multiplexer mit nachgeschaltetem Entzerrer, Digital-Analogwandler und analogem Tiefpaßfilter enthält.

FIG 2

EP 0 760 567 A2

**Beschreibung**

Die Erfindung betrifft ein Verfahren zur Quadratur-Amplituden-Modulation und einen entsprechenden Modulator.

Aus der Zeitschrift "Der Fernmeldeingenieur", Verlag für Wissenschaft und Leben Georg Heidecker GmbH Erlangen, Heft 8 und 9 von 1993, Seiten 51 bis 54 ist die Quadratur-Amplituden-Modulation beschrieben, die im folgenden als QAM abgekürzt wird. Die QAM beruht demnach auf der Verwendung zweier orthogonaler Träger derselben Frequenz, also eines Kosinus- und eines Sinus-Trägers, die auch als Normal- und Quadraturkomponente bezeichnet werden. Bei den üblichen analogen Verfahren zur QAM werden ein I-Basisbandsignal und ein Q-Basisbandsignal, die auch durch Multiplexen aus einem einzigen Basisbandsignal erzeugt sein können, jeweils einem Eingang eines Mischers zugeführt. Der Mischer für das I-Basisbandsignal erhält außerdem den Sinus-Träger mit der Phasenverschiebung von 0°, während der andere Mischer den Kosinus-Träger mit der Phasenverschiebung von 90° erhält. Die Ausgangssignale der beiden Mischer werden durch Addition zu einem QAM-Signal zusammengefaßt, das über ein Sendefilter einer Übertragungsleitung oder als ZF-Signal einer Sendestufe zugeführt werden kann.

Als Basisbandsignale werden hauptsächlich gefilterte Mehrstufensignale verwendet, die Filterkennlinie entspricht dabei der sogenannten Wurzel-Nyquist-Formung, um bandbreiteneffiziente QAM-Signale zu erzeugen. Im Hinblick auf eine wirtschaftliche Übertragung werden in zunehmenden Maße QAM-Signale mit 64 oder 256 Stufen übertragen. Bei der Verarbeitung derartiger Signale werden hohe Anforderungen gestellt, die bisher nur mit großem Aufwand realisiert werden konnten. So wird z.B. gefordert, daß die Abweichung der 90°- Trägerphase unter 1° und der Pegelunterschied der beiden Basisbandsignale vor der ZF-Addition unter 0,5 dB sein muß. Die Mischer dürfen wegen der hohen Linearitätsanforderungen nur mit reduzierter Ausgangsleistung, also beispielsweise mit einem Abstand von 11 dB vom 1 dB Kompressionspunkt betrieben werden, wodurch sich hohe Isolationsanforderungen für die Trägerunterdrückung ergeben. Üblicherweise sind vor dem Mischer noch Eingangstiefpässe angeordnet, die als Analogfilter realisiert sind und an die gleichhohe Anforderungen hinsichtlich Dämpfung und Signallaufzeit wie an die Mischer zu stellen sind. Die Realisierung der analogen QAM-Modulatoren nach dem Stand der Technik erfolgte bisher dadurch, daß die Trägerorthogonalität und der Gleichlauf der Basisbandsignale durch Prüffeldabgleich, die Trägerunterdrückung und die Linearität der Mischer durch Auswahl geeigneter Bauteile erreicht wurde, so daß sich insgesamt ein hoher Aufwand ergeben hat.

Aus dem "Fuba-Spiegel" 2/94, Seiten 11 bis 14 wird auf Seite 13, Abbildung und Beschreibung, letzte Spalte und gesamte Seite 14 bereits ein digitaler QAM-Modulator beschrieben, bei dem durch einen Modulator ein I- bzw. Q-Basisbandsignal erzeugt und über digitale Filter an einen Baustein DDS zur direkten digitalen Signalsynthese abgegeben wird. Neben der vergleichsweise sehr aufwendigen Lösung ergeben sich in diesem Fall besondere Probleme mit der Unterdrückung von Nebenwellen.

Die Aufgabe der Erfindung besteht also darin, ein weniger aufwendiges QAM-Verfahren und einen weniger aufwendigen QAM-Modulator zu entwickeln. Die Aufgabe wird erfindungsgemäß durch ein Verfahren entsprechend dem Patentanspruch 1 und durch einen QAM-Modulator entsprechend Anspruch 6 gelöst.

Das erfindungsgemäße Verfahren bietet in vorteilhafter Weise die Möglichkeit des ausschließlichen Einsatzes digitaler Bausteine und damit des Aufbaus eines QAM-Modulators in voll integrierter Technik, beispielsweise aus handelsüblichen programmierbaren Logigbausteinen, die meist unprogrammiert ausgeliefert werden. Weitere Vorteile ergeben sich dadurch, daß kein Abgleich im Prüffeld erforderlich ist, daß das Verfahren für hohe QAM-Stufenzahlen geeignet ist, da keine Linearitätsprobleme beim Mischvorgang auftreten, daß durch Signalzusammenfassung in einem Pfad eine exakte Orthogonalität und ein exakter Gleichlauf der Basisbandsignale sichergestellt ist und daß auch eine Integration mit im Signalweg davor befindlichen anwenderspezifischen integrierten Schaltungen zur Signalverarbeitung möglich ist. Das erfindungsgemäße Verfahren wird durch die in den Patentansprüchen 2 bis 5 beschriebenen Maßnahmen weitergebildet, der erfindungsgemäße QAM-Modulator ist in den Ansprüchen 6 und 8 detailliert beschrieben, der Anspruch 7 stellt eine Alternative dar, durch die ein sonst erforderliches Laufzeitglied eingespart werden kann.

Die Erfindung soll im folgenden anhand eines in der Zeichnung dargestellten Ausführungsbeispiels für einen QAM-Modulator näher erläutert werden. Dabei zeigt:

Figur 1 das Prinzip der digitalen Modulation und

Figur 2 einen erfindungsgemäßen QAM-Modulator.

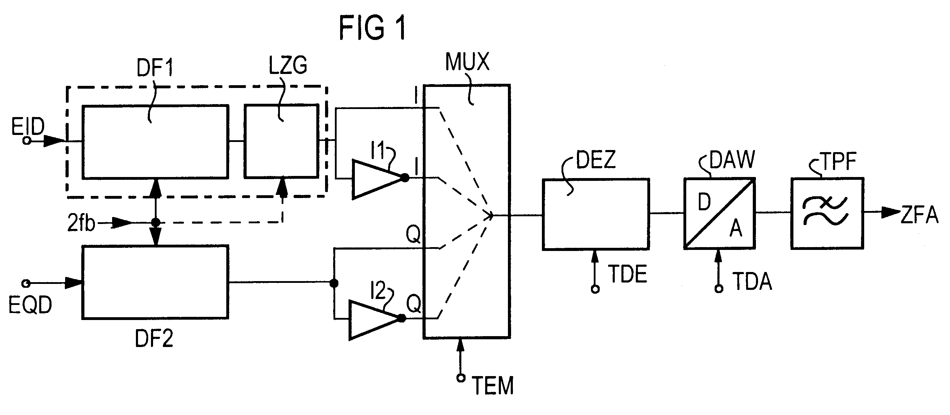

In der Figur 1 ist das Prinzip der digitalen Modulation für ein gefiltertes digitales Basisbandsignal mit zwei Abtastwerten pro Bauddauer T dargestellt. Dabei ist auf der Abszisse ein Ausschnitt dargestellt, der als typisches Beispiel den Signalverlauf zwischen der 38sten und der 43sten Baudperiode zeigt. Der sinusförmige erste Träger T1 kann die maximalen Amplitudenwerte +1 und -1 annehmen und ist zum Basisbandsignal I so synchronisiert, daß die Abtastwerte des Basisbandsignals jeweils bei Maxima oder Minima des ersten Trägers T1 auftreten. In diesem Falle ist die Modulation, als Multiplikation gleichbedeutend mit einer Vorzeicheninvertierung jedes zweiten Wertes des digitalen Basisbandsignals, da die Zwischenwerte der Multiplikation gleich Null sind. Dieses in Figur 1 dargestellte Prinzip gilt für die Modulation beider Basisbandsignale I, Q, wobei für die Multiplikation des zweiten Basisbandsignals Q ein zweiter Träger zu verwenden ist. Für eine QAM-Modulation ist außerdem erforderlich, daß die Träger um 90° phasenversetzt zueinander sind, für eine Zwischenfrequenz von fb = 1/T muß also der Zeitversatz der Trägersignale bzw. der modulierten I- und Q-Signale zueinander T/4 betragen.

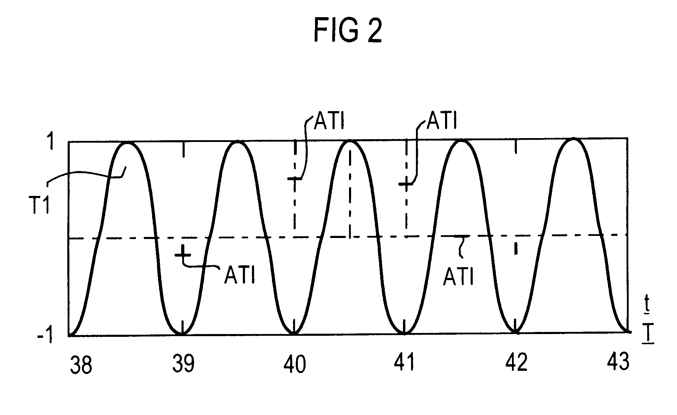

Ausgehend von den vorstehenden Überlegungen ist der in Figur 2 dargestellte digitale QAM-Modulator gestaltet. Mit den Eingängen EID, EQD für das I- bzw. Q-Basisbandsignal sind die Eingänge eines ersten bzw. zweiten digitalen Filters DF1, DF2 verbunden, deren Takteingänge ein Taktsignal mit einer Frequenz entsprechend der doppelten gewünschten Zwischenfrequenz fb erhalten. Die digitalen Filter DF1, DF2 weisen eine Wurzel-Nyquist-Charakteristik mit Spektrumsentzerrung auf, eine zusätzlich benötigte Laufzeit kann auch in das Filter eingerechnet sein, so daß dann beide Signale mit der doppelten Zwischenfrequenz übergeben werden können. Im vorliegenden Fall ist zur Erzeugung der zusätzlich benötigten Laufzeit der Ausgang des ersten digitalen Filters DF1 an ein beim Ausführungsbeispiel getaktetes Laufzeitglied LZG mit einer Laufzeit entsprechend einer Periode eines Signals mit der vierfachen Baudrate der Basisbandsignale angeschlossen, so daß sich eine Phasenverschiebung von 90° für die Ausgangssignale des ersten digitalen Filters DF1 gegenüber denen des zweiten digitalen Filters DF2 ergibt. Die Ausgangssignale des Laufzeitgliedes LZG werden einem ersten Eingang EM1 eines Multiplexers MUX und außerdem dem Eingang eines ersten Inverters I1 zugeführt, dessen Ausgangssignal an einem zweiten Eingang EM2 des Multiplexers geleitet wird. Entsprechend werden die Ausgangssignale des zweiten digitalen Filters DF2 einem dritten Eingang DM3 des Multiplexers MUX und einem Eingang eines zweiten Inverters I2 zugeführt, dessen Ausgang mit einem vierten Eingang EM4 des Multiplexers MUX verbunden ist, wobei die Reihenfolge der Abtastung der Eingangssignale programmierbar ist und für ein Regellagespektrum so gewählt wird, daß zuerst das zweite Basisbandsignal Q, dann das erste Basisbandsignal I, dann das invertierte zweite Basisbandsignal Q und dann das invertierte erste Basisbandsignal I abgetastet wird. Für ein Kehrlagespektrum ist eine Reihenfolge erforderlich, bei der die Basisbandsignale I, Q und die inversen Basisbandsignale so miteinander vertauscht sind, daß zunächst das erste Basisbandsignal I, dann das zweite Basisbandsignal Q, dann das invertierte erste Basisbandsignal und abschließend das invertierte zweite Basisbandsignal abgetastet werden. Weiterhin ist mit einem Takteingang TEM des Multiplexers MUX der Ausgang einer Quelle für ein Taktsignal mit einer Frequenz entsprechend der vierfachen Baudrate der Basisbandsignale verbunden. Der Ausgang des Multiplexers MUX ist mit dem Eingang eines digitalen Entzerrers DEZ verbunden, der ebenfalls ein Taktsignal mit der vierfachen Baudrate der Basisbandsignale erhält und eine Charakteristik entsprechend einem inversen $\frac{\sin 4x}{4x}$-Verlauf aufweist. Der Ausgang des digitalen Entzerrers DEZ ist mit dem Eingang eines Digital-Analogwandlers DAW verbunden, der ebenfalls ein Taktsignal mit der vierfachen Baudrate der Basisbandsignale erhält und an seinem Ausgang QAM-Signale an ein Tiefpaßfilter TPF abgibt, dessen Durchlaßbereich der Zwischenfrequenz und dessen Grenzfrequenz der zweifachen Zwischenfrequenz entspricht und dessen Ausgang mit dem Ausgang ZFA für das erzeugte Zwischenfrequenzsignal verbunden ist.

Der digitale Modulator entsprechend Figur 2 weist als Kern einen Multiplexer MUX auf, der mit der doppelten Filterabtaktrate die modulierten Basisbandsignale versetzt ineinander schachtelt und gleichzeitig den 90°-Versatz und die Signaladdition in der Zwischenfrequenzebene durchführt. Vor dem Multiplexer durchlaufen die Basisbandsignale I, Q zunächst gleiche impulsformende Tiefpässe, in denen eine Abtastung mit einer Frequenz entsprechend der doppelten Baudrate der Basisbandsignale vorgenommen wird, wobei im Kanal für das erste Basisbandsignal I, der im nachfolgenden Tiefpaß um ein Viertel Baudperiode früher abgetastet wird, zusätzlich eine Laufzeit von einem Viertel Bitperiode realisiert wird, damit die Signalverzögerungen der beiden Basisbandsignale wieder gleich sind. Beim Ausführungsbeispiel werden dem Multiplexer MUX die gefilterten Datensignale in normaler und invertierter Lage zugeführt und von diesem mit der vierfachen Baudrate zu einem Datenstrom zusammengefaßt.

Das Ausgangsspektrum des Digital-Analogwandlers weist je nach Roll-off einen Nutzbereich von 0 bis zum 1,5fachen der Zwischenfrequenz auf, wobei der entzerrende Verlauf um die Zwischenfrequenz in erster Näherung linear mit geringer parabolischer Verzerrung ist. Als Linearentzerrer ist deshalb der digitale Entzerrer DEZ mit einem inversen $\frac{\sin 4x}{4x}$-Verlauf nachgeschaltet, durch den erreicht wird, daß der Verlauf des Ausgangsspektrums bis zum 1,5fachen der Zwischenfrequenz konstant ist, der Oberwellenanteil wird durch das dem ZF-Ausgang ZFA vorgeschaltete Tiefpaßfilter TPF unterdrückt.

**Patentansprüche**

1. Verfahren zur QAM-Modulation von zwei Basisbandsignalen I, Q, bei dem diese jeweils getrennt mit einem von zwei zueinander um 90° phasenversetzten Trägern multipliziert werden und die sich ergebende ZF-Teilsignale zu einem ZF-Ausgangssignal addiert werden,
   **dadurch gekennzeichnet,**
   daß die Basisbandsignale (I, Q) jeweils getrennt einer Filterung unterworfen und mit einem Taktsignal mit einer Frequenz entsprechend der zweifachen Baudrate der Basisbandsignale abgetastet und damit Abtastproben erzeugt werden, daß die Abtastproben des einen Basisbandsignals(I) um eine Laufzeit von ein Viertel der Periode des ZF-Signals verzögert werden, daß aus den verzögerten bzw. dem unverzögerten Abtastproben inverse Signale gebildet werden und diese zu einem Multiplexsignal addiert werden, wobei die Abtastfolge für ein Regellagespektrum so ist, daß zunächst das Q-Basisbandsignal, dann das I-Basisbandsignal, dann das invertierte Q-Basisbandsignal und schließlich das invertierte I-Basisbandsignal abgetastet werden und das für ein Kehrlagespektrum zunächst das I-Basisbandsignal, dann das Q-Basisbandsignal, dann das invertierte I-Basisbandsignal und schließlich das invertierte Q-Basisbandsignal abgetastet werden, daß das Multiplexsignal entzerrt wird und anschließend einer Digital-Analogwandlung unterworfen wird und daß das so erzeugte quasi analoge Zwischenfrequenzsignal nach Tiefpaßfilterung an einen ZF-Ausgang (ZFA) abgegeben wird.

2. Verfahren nach Patentanspruch 1,
   **dadurch gekennzeichnet,**
   daß die Basisbandsignale (I, Q) einer Filterung an einer Wurzel-Nyquist-Kennlinie mit kombinierter Spektrumsentzerrung unterworfen werden.

3. Verfahren nach Patentanspruch 1,
   **dadurch gekennzeichnet,**
   daß das Multiplexsignal an einer inversen $\frac{\sin 4x}{4x}$-Kennlinie entzerrt wird.

4. Verfahren nach Patentanspruch 1 und 2,
   **dadurch gekennzeichnet,**
   daß die Abtastung der Basisbandsignale (I, Q) in Zusammenhang mit der Filterung erfolgt.

5. Verfahren nach Patentansprüchen 1 oder 4,
   **dadurch gekennzeichnet,**
   daß die Abtastung der Basisbandsignale (I, Q) mit einer Frequenz entsprechend der vierfachen Baudrate der Basisbandsignale erfolgt, dabei jeder zweite Abtastwert unterdrückt wird und die Verzögerung der Abtastproben des einen Basisbandsignals (I) entfällt.

6. QAM-Modulator zur Durchführung eines Verfahrens nach einem oder mehreren der vorhergehenden Patentansprüche,
   **dadurch gekennzeichnet,**
   daß mit einem Eingang (EID) für ein erstes Basisbandsignal (I) der Signaleingang eines ersten digitalen Filters (DF1) mit Wurzel-Nyquist-Charakteristik und Spektrumsentzerrung verbunden ist, daß der zweite Signaleingang (EQD) für das zweite Basisbandsignal(Q) mit dem Signaleingang eines zweiten digitalen Filters (DF2) verbunden ist, das die gleiche Charakteristik und Funktion wie das erste digitale Filter (DF1) aufweist, daß die Takteingänge der beiden digitalen Filter (DF1, DF2) an eine Quelle für ein Taktsignal mit einer Frequenz entsprechend der doppelten Baudrate der Basisbandsignale angeschlossen sind, daß der Ausgang des ersten digitalen Filters (DF1) über ein Laufzeitglied (LZG) mit einer Laufzeit entsprechend einer Periode eines Signals mit einer Frequenz entsprechend der vierfachen Baudrate der Basisbandsignale mit einem ersten Signaleingang (EM1) eines Multiplexers (MUX) und mit dem Signaleingang eines ersten Inverters (I1) verbunden ist, dessen Signalausgang mit einem zweiten Signaleingang (EM2) des Multiplexers (MUX) verbunden ist, daß der Ausgang des zweiten digitalen Filters (DF2) mit einem dritten Signaleingang (EM3) des Multiplexers (MUX) und mit einem Signaleingang eines zweiten Inverters (I2) verbunden ist, dessen Ausgangsanschluß mit einem vierten Signaleingang (EM4) des Multiplexers (MUX) verbunden ist, daß ein Taktsignaleingang (TEM) des Multiplexers (MUX) mit einer Quelle für ein Taktsignal mit einer Frequenz entsprechend der vierfachen Baudrate der Basisbandsignale verbunden ist, daß der Ausgang (EMA) des Multiplexers (MUX) mit dem Signaleingang eines digitalen Entzerrers (DEZ) mit einer inversen $\frac{\sin 4x}{4x}$-Entzerrerkennlinie verbunden ist, dessen Ausgang mit dem Eingang eines Digital-Analogwandlers DAW und dessen Ausgang über ein Tiefpaßfilter (TWF) mit einem Ausgang (ZFA) für das ZF-Signal verbunden ist und daß die Takteingänge des digitalen Entzerrers (DEZ) und des Digital-Analogwandlers (DAW) dem Takteingang (DEM) des Multiplexers (MUX) parallelgeschaltet sind.

7. QAM-Modulator nach Anspruch 6,
   **dadurch gekennzeichnet,**
   daß die Taktsignaleingänge des ersten und des zweiten digitalen Filter (DF1, DF2) dem Taktsignaleingang (TEM) des Multiplexers (MUX) parallelgeschaltet sind, mit der vierfachen Baudrate der Basisbandsignale abgetaktet wird und dabei das Laufzeitglied(LZG) entfällt.

8. QAM-Modulator nach Anspruch 6,
   **dadurch gekennzeichnet,**
   daß das Tiefpaßfilter (TPF) einen Durchlaßbereich entsprechend der Zwischenfrequenz und eine Grenzfrequenz entsprechend der doppelten Zwischenfrequenz aufweist.

# FIG 1

EP 0 760 567 A2

# FIG 2

EP 0 760 567 A2